# EUROPÄISCHE PATENTANMELDUNG

(11) **EP 1 837 106 A2**
(43) Veröffentlichungstag der Anmeldung: **26.09.2007**
(21) Anmeldenummer: 07005763.3
(22) Anmeldetag: 21.03.2007
(51) Int. Cl.: B23B 29/24

(54) **Werkzeugträger**

(30) Priorität: 23.03.2006 DE 102006013828
(71) Anmelder: Flam, Mirko, 72636 Tischardt (DE)
(72) Erfinder: Flam, Mirko, 72636 Tischardt (DE)
(74) Vertreter: Fürst, Siegfried

(57) **Zusammenfassung**

Die Erfindung betrifft einen Werkzeugträger für eine Werkzeugmaschine, der mindestens eine Aufnahmebohrung für die Aufnahme, Positionierung und lösbare Fixierung eines Schaftes eines Werkzeughalters besitzt, wobei der den Schaft eines Werkzeughalters aufnehmende vordere Abschnitt wenigstens einer der im Werkzeugträger vorgesehenen Aufnahmebohrungen ein auswechselbares Aufnahmeteil ist.

## Beschreibung

Die Erfindung betrifft einen Werkzeugträger einer Werkzeugmaschine, die in der spanenden Bearbeitung von Werkstücken verwendet wird.

Unter Werkzeugmaschinen für die spanende Fertigung sind im Sinne der Erfindung Drehmaschinen, Fräsmaschinen, Bohrmaschinen, Bearbeitungszentren, mit denen gedreht, gebohrt und/oder gefräst werden kann, als auch Dreh-, Fräs- und Bohr-Einrichtungen, die an Dreh-, Fräs- oder Bohrmaschinen oder Bearbeitungszentren ankoppelbar sind, zu verstehen. Diese Werkzeugmaschinen besitzen einen oder mehrere Werkzeugträger, wobei wenigstens einer dieser Werkzeugträger wenigstens eine Schnittstelle (Aufnahme) aufweist, in welcher ein Werkzeughalter aufgenommen, positioniert und gespannt werden kann. Ein solcher Werkzeughalter wird fachüblich in Kurzform auch Wechselteil genannt. Die in der konstruktionsmäßigen Ausführung aufeinander abgestimmten Aufnahmebohrungen des Werkzeugträgers und des aufgenommenen Bereiches/Abschnitt/Schaft des Werkzeughalters bezeichnet man fachüblich als Schnittstelle. Der Werkzeughalter kann ein statischer Halter sein, das heißt, das im Werkzeughalter aufgenommene Werkzeug rotiert nicht. Zum anderen kann ein Werkzeughalter auch als sogenannter angetriebener Werkzeughalter ausgeführt sein, das heißt, das vom Werkzeughalter aufgenommene Werkzeug kann um seine Längsachse, die Spannachse, rotieren. Hierzu besitzt der Werkzeughalter am aufgenommenen Bereich eine Kupplung. Im Werkzeugträger ist der betreffenden Aufnahmebohrung ein Antriebselement zugeordnet, welches mit seinem Kupplungsteil an das Kupplungsteil des Werkzeughalters ankoppelbar ist.

Werkzeugträger im Sinne der Erfindung sind Sternrevolver oder Planrevolver, die um deren jeweilige Zentrumsachse von einer Rastposition in eine andere Rastposition schwenkbar sind. Werkzeugträger im Sinne der Erfindung sind aber auch sogenannte Linearträger, fachumgangssprachlich oft auch als Frontapparat bezeichnet.

Im Laufe der Zeit haben sich am Markt aufgrund der verschiedensten fertigungstechnischen Aufgabenstellungen verschiedene Arten von Schnittstellen etabliert.

Ein Nachteil dieser etablierten Schnittstellen ist, dass diese Schnittstellen für den Wechsel von Werkzeughaltern an einem Werkzeugträger untereinander nicht variabel sind. Einige Werkzeugmaschinenhersteller bestücken daher ihre Werkzeugmaschinen mit Werkzeugträgern, die zwei oder mehrere verschiedene Schnittstellen aufweisen. Dadurch sind diese Werkzeugmaschinen zwar variabler im Einsatz, aber die vorbestimmten Rastpositionen des Werkzeugträgers sind Werkzeugen mit bestimmten Schnittstellen zugeordnet, was wiederum die Variabilität der Werkzeugmaschinen einschränkt.

Die Aufgabe der Erfindung besteht daher in der Weiterentwicklung der Schnittstelle zwischen Werkzeughalter und Werkzeugträger an einer besagten Werkzeugmaschine.

Die Aufgabe wird durch einen Werkzeugträger mit den Merkmalen des Anspruches 1 gelöst. Die nachgeordneten Ansprüche 2 bis 8 offenbaren Ausführungsvarianten der Erfindung.

Der neue Werkzeugträger für eine Werkzeugmaschine besitzt mindestens eine Aufnahmebohrung für die Aufnahme, Positionierung und lösbare Fixierung eines Schaftes eines Werkzeughalters, wobei der den Schaft des Werkzeughalters aufnehmende vordere Abschnitt wenigstens einer der im Werkzeugträger vorgesehenen Aufnahmebohrungen ein auswechselbares Aufnahmeteil ist.

Einer der wesentlichen Kernpunkte des neuen Werkzeugträgers besteht also darin, dass die nach DIN 69880 genormte Schnittstelle (Aufnahmebohrung), die so genannte VDI-Schnittstelle, als ein in den Körper des Werkzeugträgers auswechselbar angeordnetes Aufnahmeteil ausgebildet ist. Das Aufnahmeteil wird zudem als modularer Bausatz vorgehalten, so dass ergänzend viele Schnittstellenausführungen an einem Werkzeugträger für Werkzeugmaschinen möglich sind.

So ist nach einer Ausführung an dem neuen Werkzeugträger das Aufnahmeteil ein im Wesentlichen zylindrischer Grundkörper, wobei selbiger einenends einen Flansch aufweist und von diesem Flansch ausgehend eine zum anderen Ende hin gerichtete, zentrisch zur Körperlängsachse liegende Aussparung vorgesehen ist, in welche der Schaft eines Werkzeughalters aufgenommen wird.
In spezieller Ausführung ist die längs gerichtete Aussparung eine Durchgangsbohrung, die zur Aufnahme eines Zylinderschaftes eines Werkzeughalters nach DIN 69880 ausgebildet.

Nach einer weiteren Ausführung ist vorgesehen, dass das Aufnahmeteil im Wesentlichen das äußere Gehäuse eines angetriebenen Werkzeughalters ist.

Nach einer anderen Ausführungsvariante ist vorgesehen, dass die Aussparung eine gestufte Grundbohrung ist, wodurch eine hohe Variabilität für den Einsatz des neuen Werkzeugträgers erreicht wird.

Der neue Werkzeugträger zeichnet sich auch dadurch aus, dass die besagte Grundbohrung zur Aufnahme eines Werkzeugadapters nach der DE 20 2004 011 571 U1 ausgebildet ist.

Weitere Vorteile für die Verwendung des neuen Werkzeugträgers werden durch eine Ausführungsvariante erreicht, bei der das Aufnahmeteil speziell gestaltet ist, das heißt, das Aufnahmeteil weist einen vorderen Abschnitt auf und sein daran anschließender Grundkörper, entlang seiner Längsachse, einen Positionierabschnitt, mit einem ersten größeren Durchmesser, einen Übergangsabschnitt, einen Führungsabschnitt, mit einem zweiten kleineren Durchmesser, und einen Endabschnitt, mit einem dritten Durchmesser, wobei der dritte Durchmesser kleiner als der zweite Durchmesser ist. Bevorzugt ist vorgesehen, dass der Übergangsbereich von Durchmesser zu Durchmesser eine geneigte Fläche ist.

Die Erfindung wird folgend anhand von schematisch in Zeichnungen dargestellten Ausführungsbeispielen an sich und in Details weiter erläutert. Dabei zeigen
- Fig. 1: in teilweiser Schnittdarstellung einen Ausschnitt aus einem neuen Werkzeugträger, einem Sternrevolver nebst aufgenommenen Werkzeughaltern in verschiedener Ausführung;

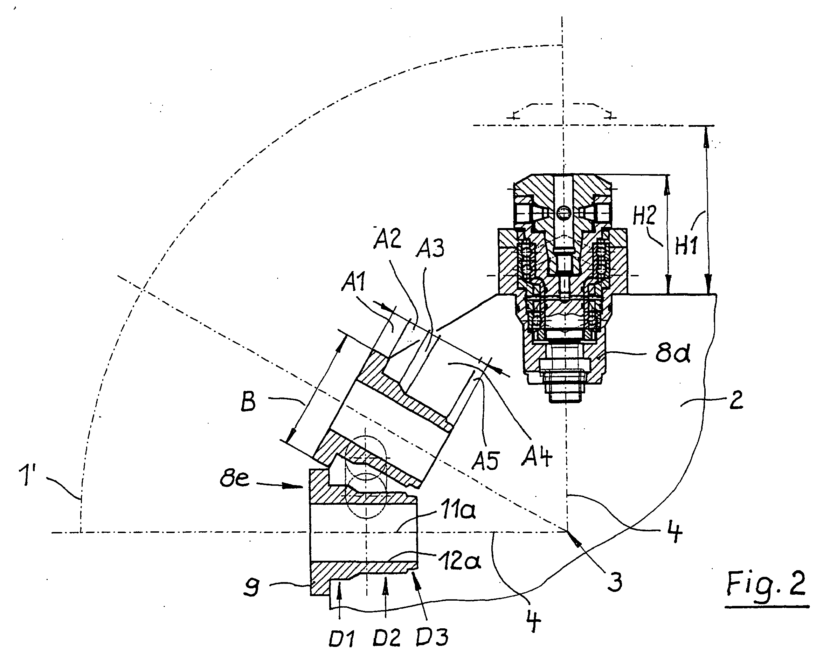

- Fig. 2: Details zu neuen Aufnahmeteilen;

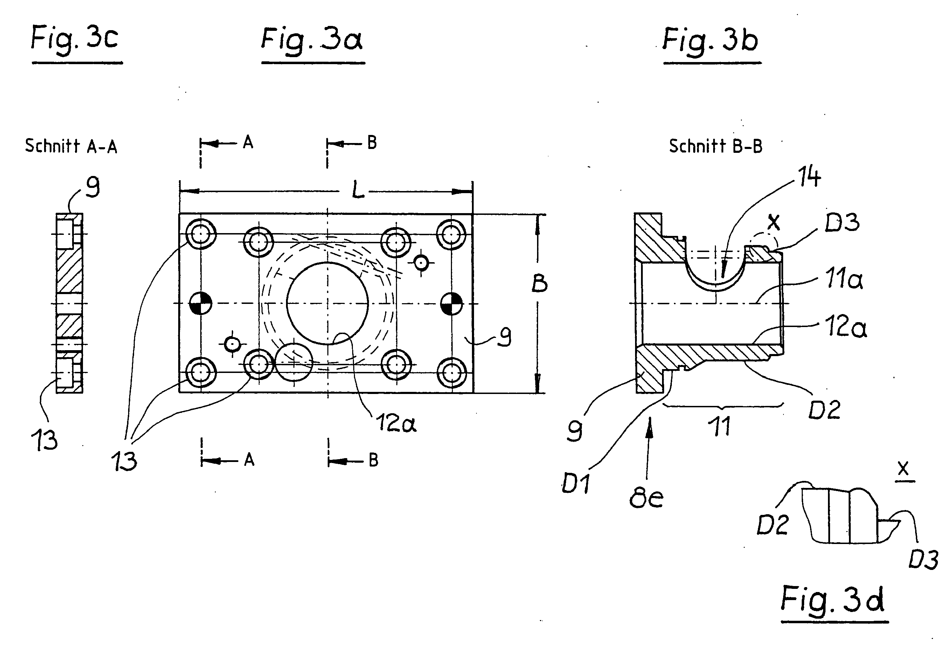

- Fig. 3a bis und 3d: weitere Details einer Ausführung nach Fig. 2;

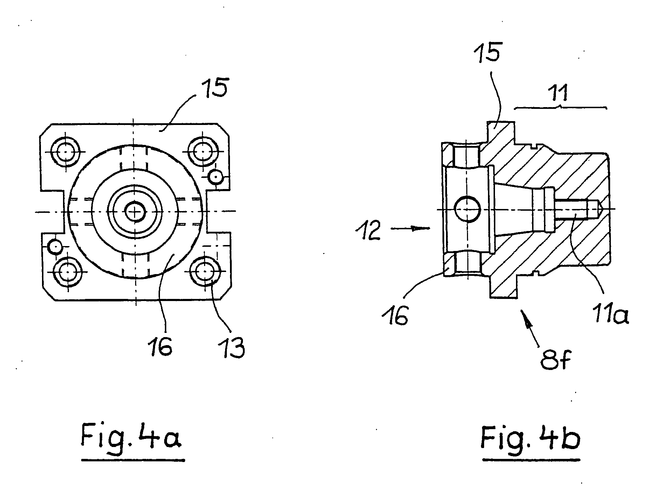

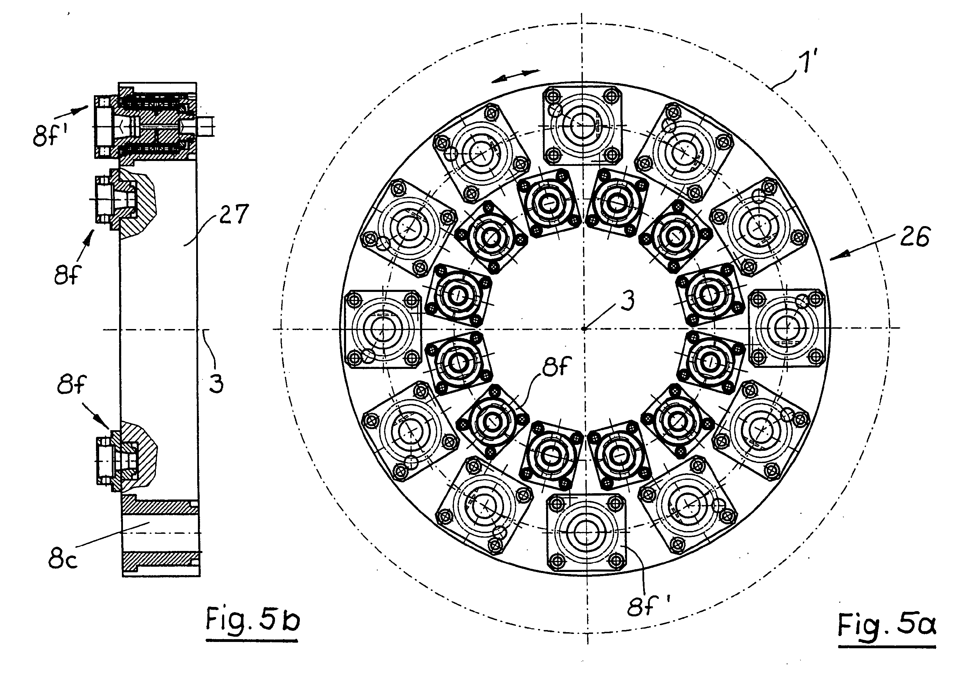

- Fig. 4a, 4b und Fig. 5a, 5b: eine weitere Ausführung eines Aufnahmeteils Ansichten zu einem weiteren neuen Werkzeugträger, einen Planrevolver.

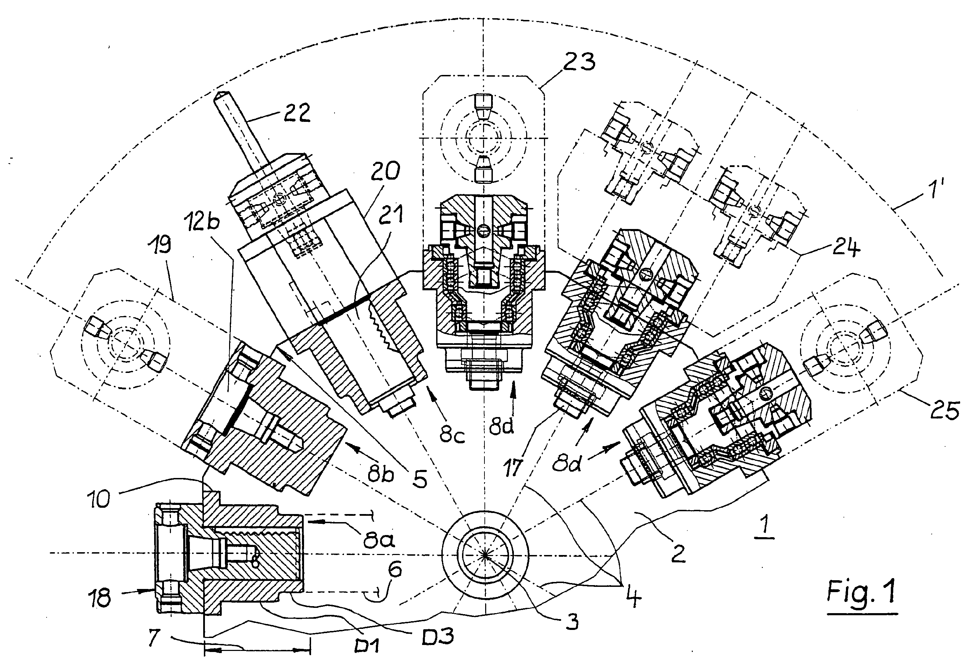

Die Figur 1 zeigt einen Ausschnitt aus einem Werkzeugträger, der in Form eines Sternrevolvers 1 aufgebaut ist. Gezeigt sind die bezüglich der vorliegenden Erfindung wesentlichen Details. Auf die Darstellung weiterer zum Sternrevolver 1 gehörenden Bauteile und Baugruppen wurde zur besseren Übersichtlichkeit in den Zeichnungen hier verzichtet.

Der Grundkörper dieses Sternrevolvers 1 ist eine Revolverscheibe 2. Um die Schwenkachse 3 ist dieser Sternrevolver 1 von einer vorgegebnen zu einer weiteren vorgegebenen Rastposition schwenkbar. Die Mantelfläche des Sternrevolvers 1 besitzt eine Vielzahl von ebenen Flächen. Von diesen Flächen ausgehend sind konzentrisch zu vorgegebenen Radialachsen 4 je eine sich in die Revolverscheibe 4 hinein erstreckende Aufnahmebohrung angeordnet, wobei deren vorderer Abschnitt ein auswechselbares Aufnahmeteil ist.

Jedes Aufnahmeteil 8 besitzt einenends einen Flansch und erstreckt sich vom Flansch aus zum anderen Ende hin in Form eines zylindrischen Grundkörpers. Zur Aufnahme des Schaftes eines Werkzeughalters ist in jedem Aufnahmeteil eine Aussparung 12 vorgesehen. Um Werkzeughalter mit unterschiedlichen Schäften aufnehmen zu können, ist vorgesehen, dass diese Aufnahmeteile 8 eines Werkzeugträgers in Form eines modularen Bausatzes vorgesehen sind. So ist bei einem Ausnahmeteil die Aussparung 12 für die Aufnahme eines Schaftes eines Werkzeughalters als Durchgangsbohrung 12a ausgeführt. Diese Ausgestaltung dient insbesondere zur Aufnahme eines Schaftes eines Werkzeughalters, der nach DIN 69880 ausgeführt ist, die sogenannte VDI-Schnittstelle. Nach einer anderen in Figur 1 gezeigten Ausführung ist das Aufnahmeteil das äußere Gehäuseteil eines angetriebenen Werkzeughalters 8d oder 8f.

Mit den in Figur 1 gestrichelt dargestellten Körpern wird aufgezeigt, dass der Flansch eines Aufnahmeteiles 8c oder 8d in einer Variante so ausgebildet ist, dass an sich bekannte Werkzeughalter oder Adapter für Werkzeughalter an den Flansch ansetzbar sind. Zum Beispiel ein Kombi-Halter 25 der ein Doppel-Axial-Kopf 24 oder ein Winkelkopf 23.

Die weitere Beschreibung der neuen Vorrichtung ist zunächst zwecks Durchführung der Neuheitsrecherche aus dem jeweiligen Anspruchswortlaut in Verbindung mit den Zeichnungen und dem Bezugsziffernverzeichnis zu entnehmen

Alle in der vorstehenden Beschreibung erwähnten sowie auch nur allein aus der Zeichnung entnehmbaren Merkmale sind weitere Bestandteile der Erfindung, auch wenn sie nicht besonders hervorgehoben und insbesondere nicht in den Ansprüchen erwähnt sind.

Die Erfindung ist nicht auf das beschriebene Ausführungsbeispiel beschränkt, sondern im Rahmen der Offenbarung vielfach variabel.

### Bezugsziffernverzeichnis:

- 1: Sternrevolver (Werkzeugträger)
- 1': maximaler Flugkreis der Werkzeuge
- 2: Revolverscheibe
- 3: Schwenkachse
- 4: radial gerichtete Achsen
- 5: äußerer Durchmesser v. Pos. 2
- 6: Aufnahmen / Aufnahmedurchmesser
- 7: aufnehmender vorderer Abschnitt
- 8a, 8b, 8c, 8d, 8e, 8f, 8f': Aufnahmeteile
- 9: Flansch (rechteckig)
- 10: Flansch (rund)
- 11: zylindrischer Grundkörper
- 11a: Längsachse von Pos.1 1
- 12: Aussparung
- 12a: Durchgangsbohrung
- 12b: gestufte Grundbohrung
- 13: Senklöcher
- 14: Durchbruch
- 15: Flansch (quadratisch)
- 16: vorderer Ansatz
- 17: Kupplung

- 18: Grundhalter WFB / VDI
- 19: Grundhalter WFB
- 20: angetriebener Werkzeughalter
- 21: Schaft
- 22: Bohrer
- 23: Winkelkopf
- 24: Doppelaxialkopf
- 25: Kombihalter
- 26: Planrevolver
- 27: Revolverscheibe

- A1: vorderer Abschnitt (Flansch)
- A2: Positionierabschnitt
- A3: Übergangsabschnitt
- A4: Führungsabschnitt
- A5: Endabschnitt
- B: Breite von Pos.9
- D1: erster Durchmesser
- D2: zweiter Durchmesser
- D3: dritter Durchmesser
- L: Länge von Pos.9
- H1: Höhe bekannte Bauart
- H2: Höhe neue Bauart

## Patentansprüche

1. Werkzeugträger für eine Werkzeugmaschine, der mindestens eine Aufnahmebohrung für die Aufnahme, Positionierung und lösbare Fixierung eines Schaftes eines Werkzeughalters besitzt,
**dadurch gekennzeichnet, dass**
der den Schaft eines Werkzeughalters aufnehmende vordere Abschnitt wenigstens einer der im Werkzeugträger vorgesehenen Aufnahmebohrungen ein auswechselbares Aufnahmeteil ist.

2. Werkzeugträger nach Anspruch 1,
**dadurch gekennzeichnet, dass**
das Aufnahmeteil ein im Wesentlichen zylindrischer Grundkörper (11) ist, wobei selbiger einenends einen Flansch (9;10;15) aufweist und von diesem Flansch ausgehend eine zum anderen Ende hin gerichtete, zentrisch zur Körperlängsachse (11a) liegende Aussparung (12)vorgesehen ist, in welche der Schaft eines Werkzeughalters aufgenommen wird.

3. Werkzeugträger nach Anspruch 2,
**dadurch gekennzeichnet, dass**
die längs gerichtete Aussparung (12) eine Durchgangsbohrung (12a) ist.

4. Werkzeugträger nach Anspruch 3,
**dadurch gekennzeichnet, dass**
die Durchgangsbohrung (12a) zur Aufnahme eines Zylinderschaftes (21) eines Werkzeughalters nach DIN 69880 ausgebildet ist.

5. Werkzeugträger nach Anspruch 2,
**dadurch gekennzeichnet, dass**
das Aufnahmeteil (8d oder 8f) im Wesentlichen das äußere Gehäuse eines angetriebenen Werkzeughalters ist.

6. Werkzeugträger nach Anspruch 2,
**dadurch gekennzeichnet, dass**
die Aussparung (12) eine gestufte Grundbohrung (12b) ist.

7. Werkzeugträger nach Anspruch 6,
**dadurch gekennzeichnet, dass**
die Grundbohrung (12b) zur Aufnahme eines Werkzeugadapters nach der DE 20 2004 011 571 U1 ausgebildet ist.

8. Werkzeugträger nach Anspruch 2, 3, 4, 6 oder 7
**dadurch gekennzeichnet, dass**
das ein Aufnahmeteil (8e oder 8f) einen vorderen Abschnitt (A1) aufweist und der daran anschließende Grundkörper (11) entlang seiner Längsachse (11a) einen Positionierabschnitt (A2), mit einem ersten größeren Durchmesser (D1), einen Übergangsabschnitt (A3), einen Führungsabschnitt (A4), mit einem zweiten kleineren Durchmesser (D2), und einen Endabschnitt (A5), mit einem dritten Durchmesser (D3), aufweist.
